# FASCICULE DE BREVET EUROPEEN

(11) **EP 2 486 570 B1**
(45) Date de publication et mention de la délivrance du brevet: **03.12.2014**
(21) Numéro de dépôt: 10760697.2
(22) Date de dépôt: 05.10.2010
(51) Int. Cl.: G21C 3/324

(54) **CORPS D'ASSEMBLAGE DE COMBUSTIBLE NUCLEAIRE ET UN ASSEMBLAGE DE COMBUSTIBLE NUCLEAIRE COMPORTANT UN TEL CORPS**
GEHÄUSE FÜR EIN KERNBRENNSTABBÜNDEL UND MIT EINEM DERARTIGEN GEHÄUSE VERSEHENES KERNBRENNSTABBÜNDEL
BODY FOR NUCLEAR FUEL ASSEMBLY AND NUCLEAR FUEL ASSEMBLY COMPRISING SUCH A BODY

(30) Priorité: 08.10.2009 FR 0957021
(43) Date de publication de la demande: 15.08.2012
(73) Titulaire: Commissariat à l'Énergie Atomique et aux Énergies Alternatives, 75015 Paris (FR)
(72) Inventeur: RAVENET, Alain, F-83560 Vinon-sur-verdon (FR)
(74) Mandataire: Ilgart, Jean-Christophe
(86) Numéro de dépôt international: PCT/EP2010/064779
(87) Numéro de publication internationale: WO 2011/042406

(56) Documents cités:
- DE-A1- 4 041 348
- FR-A1- 2 136 901
- FR-A1- 2 146 976
- FR-A1- 2 374 727
- FR-A2- 2 009 838
- JP-A- 2 138 898

## Description

### DOMAINE TECHNIQUE ET ART ANTÉRIEUR

La présente invention se rapporte à un corps d'assemblage de combustible nucléaire et un assemblage de combustible nucléaire comportant un tel corps.

Les centrales de production d'énergie à partir des réactions de fission nucléaires utilisent des éléments combustibles dans lesquels se produisent les fissions qui libèrent la puissance calorifique.

Celle-ci est extraite des éléments par échange thermique avec un fluide caloporteur qui assure leur refroidissement.

Les éléments de combustible sont sous la forme d'aiguilles de combustible réunies en faisceau, ces faisceaux étant logés dans un corps, l'ensemble formant un assemblage combustible.

Différents types d'assemblage existent en fonction des conditions de fonctionnement et des performances des réacteurs. cf. par exemple FR 2136901, DE 4041348, FR 2374727, FR 2146976, JPH02138898 et FR 2009838.

Dans le cadre du développement de réacteurs de nouvelle conception, dits de IVème génération, il est envisagé des réacteurs à neutrons rapides refroidis soit par un caloporteur gaz, les RNR-G (Réacteur à Caloporteur Gaz) soit par du sodium, les RNR-Na.

Un assemblage de type connu pour un coeur de réacteur à neutrons rapides refroidi au sodium comporte de bas en haut :
- un pied cylindrique de section circulaire servant à positionner et maintenir l'assemblage dans une chandelle du sommier servant de collecteur d'alimentation en sodium froid du coeur. Tous les assemblages du coeur reposent sur le sommier et sont disposés les uns à côté des autres,
- un corps monolithique constitué d'un tube cylindrique de section hexagonale régulière s'étendant entre le pied et la protection neutronique supérieure qui sera décrite ci-dessous. Le corps contient un faisceau d'aiguilles gainées enfermant un matériau fissile et/ou fertile, les aiguilles étant généralement maintenues régulièrement espacées,
- un bloc massif cylindrique de section hexagonale régulière constitué d'un ou de plusieurs matériaux empêchant les fuites neutroniques en partie supérieure du coeur, l'extrémité de ce bloc formant également une tête de préhension de l'ensemble de l'assemblage. En outre, un canal traverse de bas en haut ce bloc pour évacuer par la tête le débit de sodium refroidissant l'assemblage. Cet ensemble est appelé protection neutronique supérieure ou PNS.

Chaque assemblage est amovible individuellement et peut être retiré ou mis en place sur le sommier selon les nécessités de fonctionnement du réacteur, notamment pour les opérations de rechargement de ce dernier.

En position sur le sommier, les assemblages sont parcourus dans le coeur par le sodium liquide; ce dernier pénètre dans chaque assemblage par les ouvertures prévues à cet effet autour du pied et s'écoule de bas en haut à partir du pied et sort par la protection neutronique supérieure en refroidissant le faisceau d'aiguilles combustibles ou fertiles au passage à travers le corps.

Les réalisations actuelles de réacteurs à neutrons rapides refroidis au sodium dans le monde ont des assemblages combustibles avec un corps comportant un tube hexagonal monolithique métallique, le plus souvent en acier inox austénitique, ferritique ou ferrito-martensitique.

Le corps remplit deux fonctions principales garantissant le bon fonctionnement des assemblages et du coeur.

D'une part, le corps relie mécaniquement le pied à la protection neutronique supérieure. Il assure alors l'intégrité de l'assemblage lors de la préhension de celui-ci par la protection neutronique supérieure. Il apporte également la rigidité à l'ensemble permettant son maintien lorsque le pied est monté dans le sommier.

D'autre part, le tube guide de bas en haut le débit du fluide de refroidissement nécessaire au refroidissement des faisceaux combustibles et/ou fertiles, et assure une maîtrise des diamètres hydrauliques dans chaque section de l'assemblage. En effet, le maintien des diamètres hydrauliques est une condition importante pour assurer la stabilité du fonctionnement.

La déformation diamétrale du tube doit donc être limitée. Il est conçu de sorte à former un tube de force.

Le corps remplit également des fonctions secondaires visant à fiabiliser les fonctions des autres constituants et à relever globalement le niveau de sûreté de fonctionnement des assemblages et du coeur.

Le corps faisant partie intégrante du coeur, le matériau dont il est constitué est choisi de sorte à être un matériau neutroniquement compatible avec l'obtention d'un flux rapide et avec la densité de puissance volumique visés dans le coeur.

En outre, il assure un confinement mécanique protecteur des éléments combustibles constituant l'assemblage, les préservant de tous risques d'endommagement au cours de la vie des assemblages, tels qu'en fabrication, lors du transport, de la manutention et en fonctionnement réacteur et lors du cycle hors réacteur en tant qu'assemblage de combustible usagé.

La section hexagonale du tube permet de réaliser un réseau compact hexagonal, et d'obtenir une compacité géométrique élevée des composants, et ainsi un massif critique à forte densité volumique de noyaux fissiles.

En outre, on choisit un matériau pour réaliser le corps minimisant la présence de matériaux défavorables aux réactions neutroniques. On choisit alors des matériaux dont les propriétés mécaniques sont satisfaisantes et parmi ceux-ci, ceux présentant le plus faible impact sur les réactions neutroniques.

Pour les corps des assemblages des réacteurs à neutrons rapides refroidis au sodium, les aciers retenus sont des inox de nuances austénitique, ferritique ou ferrito-martensitique.

En ce qui concerne la fonction tube de force, on choisit l'épaisseur d'acier adaptée à la pression interne.

Par conséquent, les corps d'assemblage actuels sont constitués d'un tube monolithique à section hexagonale dont le matériau est le moins pénalisant pour le bilan neutronique et dont l'épaisseur est apte à tenir la pression interne.

Pour les réacteurs de quatrième génération, on cherche à améliorer les performances et à améliorer la sûreté du coeur, notamment lors de séquences accidentelles.

Notamment, on cherche à réaliser des corps d'assemblage dont la résistance au fluage thermique et aux effets de la forte fluence rapide (E > 0,1 MeV) est accrue.

La fluence rapide a pour effet de dégrader les propriétés mécaniques et provoquer des déformations, par exemple un gonflement et un fluage d'irradiation.

Les aciers inox utilisés actuellement sont adaptés à la gamme de température de fonctionnement 380°C-700°C, qui est la gamme de température des RNR-Na. Au-delà de cette gamme de températures de fonctionnement normal, les propriétés mécaniques de l'acier s'effondrent rapidement dès 850°C-900°C, qui sont des températures qui peuvent être atteintes par les RNR-gaz, ce qui dégrade fortement la capacité du corps à préserver ses fonctions mécaniques.

L'acier a son point de fusion vers 1400°C, soit bien avant celle du combustible.

Il existe des matériaux réfractaires capables de tenir à ces niveaux de température, cependant ils sont incompatibles d'un point de vue neutronique.

C'est par conséquent un but de la présente invention d'offrir un assemblage de combustible nucléaire, plus particulièrement un corps d'assemblage, capable de répondre aux conditions mécaniques à des températures supérieures à celles des températures de fonctionnement et minimisant la présence de matériaux défavorables aux réactions neutroniques dans le coeur du réacteur.

### EXPOSÉ DE L'INVENTION

Le but précédemment énoncé est atteint par un corps d'assemblage composite comportant des éléments d'extrémités reliés par une structure métallique munies de lumières, et un cylindre central en matériau céramique dont l'influence négative sur les réactions neutroniques est réduite, ce matériau pouvant même avoir une influence positive.

En d'autres termes, le corps d'assemblage comporte deux manchons d'extrémité métallique, une structure métallique externe et ajourée sur la hauteur fissile, et une structure interne en matériau céramique constituant le canal hydraulique sur la hauteur fissile.

En réalisant un corps composite, il est possible de réaliser une optimisation fonctionnelle de chaque sous-ensemble

Grâce à la présente invention, il est possible d'optimiser le choix des matériaux constitutifs pour améliorer le bilan neutronique du volume fissile du coeur par sa composition atomique en diminuant la présence d'espèces influant négativement sur le bilan au profit d'espèces plus favorables, avec influence positive, sinon moins négative. En effet, en réalisant une armature ajourée n'ayant qu'un rôle mécanique, il est possible de réduire considérablement la fraction volumique des matériaux ayant une influence négative sur le bilan neutronique.

Grâce à cette structure en manchons céramiques, le débit du fluide de refroidissement du faisceau d'éléments combustibles est confiné tout en maîtrisant les sections hydrauliques sur la hauteur du faisceau. En outre, la géométrie tubulaire ainsi réalisée forme une paroi continue ou pseudo-continue autour du faisceau permettant d'assurer le confinement du débit axial dans le faisceau. Dans le cas d'une paroi pseudo-continue, un certain taux de fuites radiales acceptable peut apparaître vers les zones inter-assemblages.

De manière avantageuse, la forme des plans de joints entre les tronçons en céramique et leur positionnement en regard de sections non ajourées de l'armature sont tels qu'ils permettent de réguler les fuites radiales.

La présente invention a alors principalement pour objet un corps d'assemblage de combustible nucléaire destiné à contenir des aiguilles de combustible nucléaire, ledit corps d'axe longitudinal comportant un premier manchon tubulaire et un deuxième manchon tubulaire en matériau métallique formant les extrémité longitudinales du corps d'assemblage, une armature en matériau métallique raccordant le premier et le deuxième manchon, l'armature étant ajourée, et une structure interne tubulaire en céramique disposée entre le premier et le deuxième manchon à l'intérieur de l'armature.

Dans un exemple de réalisation, la structure interne est étanche au fluide de refroidissement destiné à la traverser.

Dans un autre exemple de réalisation, la structure interne comporte des zones de fuites calibrées.

Par exemple, la structure interne comporte des tronçons superposés longitudinalement, les deux tronçons situés aux deux extrémités de la structure interne pénétrant partiellement dans les premier et deuxième manchons.

Avantageusement, les tronçons s'emboîtent les uns dans les autres.

Les extrémités longitudinales des tronçons s'emboîtant peuvent comporter pour l'une une rainure et pour l'autre une nervure de forme correspondante.

L'armature est formée, par exemple par l'assemblage de montant définissant des fenêtres.

L'armature peut comporter des montants axiaux et transversaux.

Avantageusement, les montants transversaux recouvrent des zones de raccordement des tronçons.

L'armature peut être fixée sur les manchons par soudage et/ou un assemblage mécanique, celui-ci étant par exemple du type à queue d'aronde.

L'armature selon la présente invention peut être formée d'un tube ajouré de perçages formant des lumières circulaires ou oblongues.

Dans une variante, la structure interne peut être formée de plaques fixées sur l'armature de sorte à obturer les fenêtres de ladite.

Le corps d'assemblage selon la présente invention comporte avantageusement un dispositif de compensation d'un jeu axial entre l'extrémité du tronçon d'extrémité et le deuxième manchon destiné à être situé dans la partie supérieure de l'assemblage. Celui-ci est par exemple formé d'une rondelle munie d'ondulations d'amplitude 5 mm s'intercalant entre le tronçon d'extrémité et le deuxième manchon supérieur.

Avantageusement, le corps d'assemblage présente une section transversale hexagonale régulière.

La structure interne est par exemple en SiC, en SiC fibré ou en MAX-phases type Ti3SiC2.

Dans le cas d'un corps d'assemblage pour réacteur à neutron rapide refroidi au sodium, les manchons et l'armature peuvent être aciers inox austénitiques, ferritiques ou ferrito-martensitiques.

En variante, les manchons peuvent être en acier austénitique standard 316 Ti et l'armature en EM10.

Dans le cas d'un corps d'assemblage selon pour un réacteur à neutrons rapides refroidi au gaz, les manchons et l'armature peuvent être réalisés dans des métaux réfractaires.

La présente invention a également pour objet un assemblage comportant un pied, un corps d'assemblage selon la présente invention, des aiguilles de combustible nucléaire disposées dans le corps d'assemblage et une protection neutronique supérieure, le corps étant fixé sur le pied et sur la protection neutronique supérieure au niveau des premier et deuxième manchons respectivement, par exemple par soudage.

### BRÈVE DESCRIPTION DES DESSINS

La présente invention sera mieux comprise à l'aide de la description qui va suivre et des dessins en annexe, sur lesquels :
- la figure 1 est une vue en perspective d'un exemple de réalisation d'un corps d'assemblage selon la présente invention,
- la figure 2 est une vue éclatée du corps d'assemblage de la figure 1,
- la figure 3 est une vue en perspective de l'armature du corps,
- la figure 4 est une vue de détail d'une zone de raccord entre différents éléments du corps selon la présente invention,
- la figure 5 est une vue en coupe transversale selon le plan A-A,
- la figure 6 est une vue en coupe transversale selon le plan B-B,
- la figure 7 est une vue de détail de la zone de raccordement entre deux tronçons de la structure interne en position écartée,
- la figure 8 est une vue en perspective d'un assemblage selon la présente invention.

### EXPOSÉ DÉTAILLÉ DE MODES DE RÉALISATION PARTICULIERS

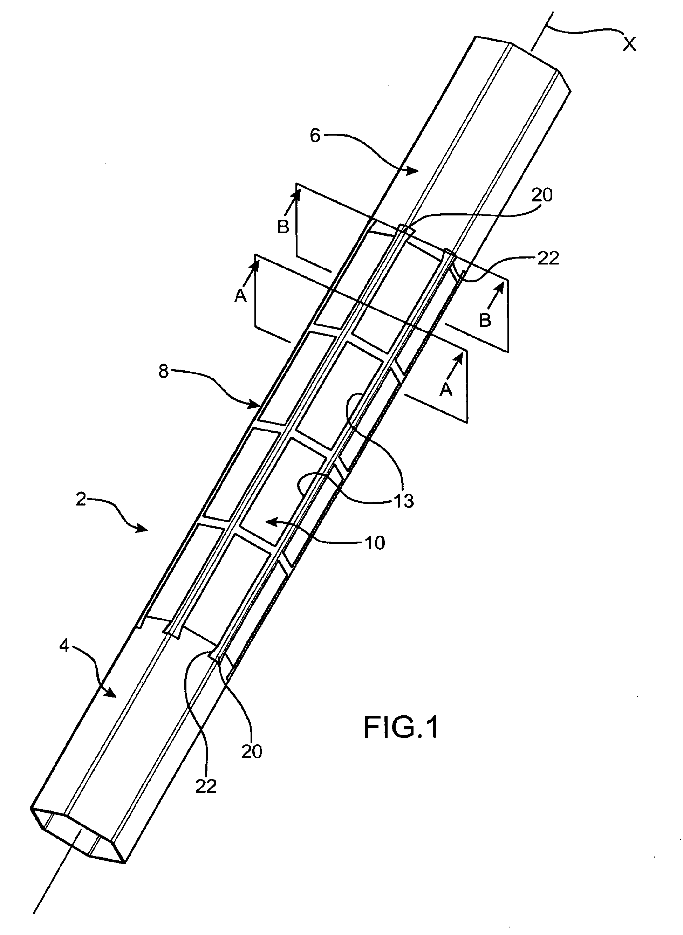

Sur la figure 1, on peut voir un corps d'assemblage 2 selon la présente invention destiné à recevoir en son sein des aiguilles de combustible nucléaire pour former un assemblage.

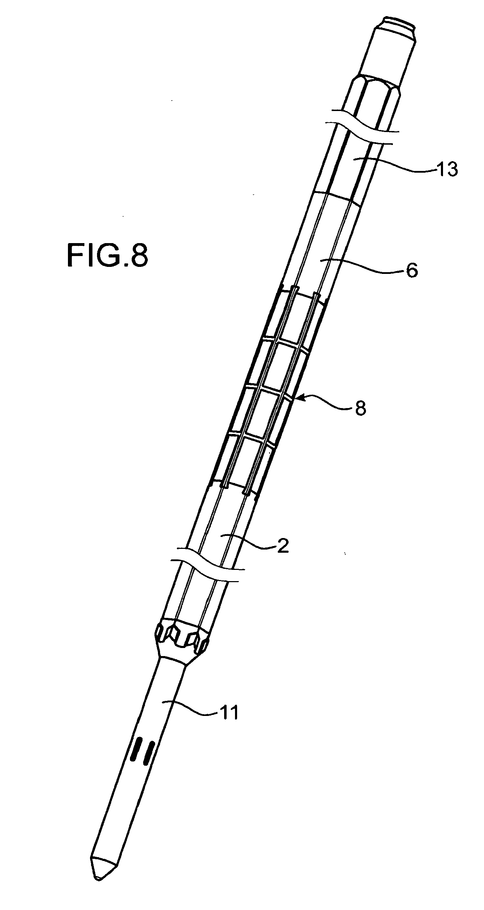

Sur la figure 8, on peut voir l'assemblage complet selon la présente invention, les aiguilles ne sont pas visibles.

Le corps d'assemblage est prévu pour avoir une position verticale lorsqu'il est dans le coeur.

Le corps d'assemblage 2 selon la présente invention d'axe longitudinal X, comporte un premier manchon 4 d'axe X destiné à former l'extrémité inférieure du corps 2, un deuxième manchon 6 d'axe X destiné à former l'extrémité supérieure du corps 2, une armature 8 d'axe X reliant le premier manchon 4 et le deuxième manchon 6, et une structure interne 10 entre le premier manchon 4 et le deuxième manchon 6 et disposée à l'intérieur de l'armature 8.

Dans l'assemblage, le premier manchon 4 est relié mécaniquement au pied de l'assemblage 11 destiné à être logé dans le sommier du réacteur, et le deuxième manchon 6 est relié à la protection neutronique supérieure 13.

L'assemblage est refroidi par circulation d'un fluide de bas en haut, par exemple du gaz dans le cas d'un RNR-G ou du sodium dans le cas d'un RNR-Na.

Le fluide de refroidissement pénètre par le pied traverse le premier manchon 4, la structure interne 10, le deuxième manchon 6 et ressort de l'assemblage par la protection neutronique supérieure.

La structure interne 10 présente une hauteur telle qu'elle s'étende sur toute la hauteur fissile, i.e. la zone recevant les aiguilles de combustible. L'armature 8 s'étend également sur toute la hauteur fissile.

Dans l'exemple représenté et de manière avantageuse, le corps 2 a une section hexagonale régulière permettant d'obtenir une forte densité volumique de noyaux fissiles. Cependant, un corps ayant une section transversale présentant une autre forme ne sort pas du cadre de la présente invention, par exemple une section circulaire.

Selon l'invention, l'armature est disposée à l'extérieur du corps et forme un squelette extérieur assurant le maintien mécanique du corps.

L'armature assure la liaison mécanique entre le pied de l'assemblage via le premier manchon 4 et la protection neutronique supérieure via le deuxième tronçon 6.

L'armature 8 supporte les moments de flexion pour assurer la tenue en poutre de l'assemblage, les moments de torsion afin d'assurer le maintien de l'alignement des tronçons tubulaires 10 sur la hauteur de l'assemblage et des efforts axiaux dus au poids des structures, en traction et compression lors de la manutention de l'assemblage.

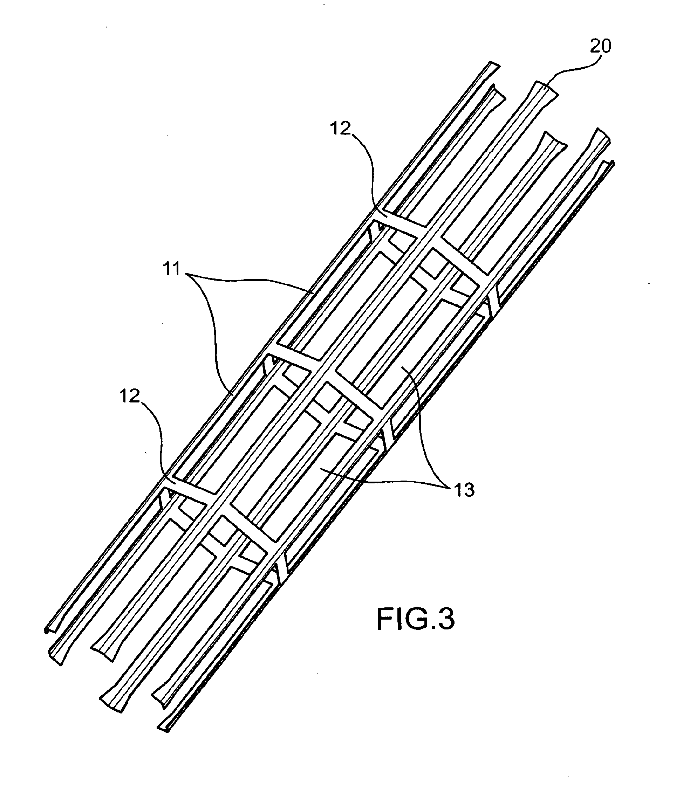

La figure 3 montre l'armature 8 qui comporte des montants longitudinaux 11 et des montants transversaux 12, ces montants 11 et 12 définissant des fenêtres 13.

Dans l'exemple représenté, les six faces de l'armature 8 comportent chacune quatre fenêtres de forme rectangulaire.

D'autres formes de fenêtres sont envisageables, comme des trous par exemple répartis en fonction des sollicitations mécaniques assurées par l'armature.

L'armature représente un très faible volume du corps, ce qui minimise sa fraction volumique dans le volume fissile du coeur. En outre, comme nous le verrons par la suite, elle permet un passage du fluide de refroidissement dans les zones interassemblages.

De manière avantageuse, on utilise, pour réaliser l'armature 8 un matériau présentant des propriétés mécaniques telles que les ductilités en plasticité et en fluage thermique soient supérieures ou égales à 0,2 % et que la ténacité K_{IC} soit supérieure ou égale à 20 MPa.m^{1/2}.

Le matériau de l'armature est choisi de sorte que ces propriétés mécaniques soient présentes en tenant compte de l'exposition à la fluence maximale du coeur et des conditions de température de fonctionnement. L'armature est réalisée en matériau métallique, par exemple en acier inox. L'acier est choisi tel qu'il ne gonfle pas ou peu à la fluence du coeur, comme l'acier inox de nuance ferrito-martensitique, EM10 par exemple.

De préférence, la composition atomique des matériaux utilisés pour l'armature est favorable au bilan neutronique, à la fois en fonctionnement normal et en situations accidentelles, et pour les cycles après utilisation du point de vue du niveau d'activation.

L'armature est par exemple réalisée en soudant des tiges les unes aux autres ou en réalisant des fenêtres dans une tôle qui est ensuite conformée en tube ou en réalisant des fenêtres directement dans un tube.

Les manchons sont réalisés en matériaux métalliques et sont soudés sur les extrémités de l'armature. Les manchons 4, 6 sont sensiblement identiques. Les manchons 4, 6 présentent une section sensiblement identique à celle de l'armature 8, et ménage un passage interne pour l'écoulement du fluide de refroidissement.

Les manchons 4, 6 sont disposés respectivement en dessous et au dessus de la zone fissile, ils sont donc peu soumis au flux neutronique des aiguilles combustibles. Par conséquent, le ou les matériaux les constituant n'ont besoin que d'être résistants à des conditions d'irradiation modérées. En effet, la fluence locale à laquelle ils sont soumis est inférieure à la moitié de la fluence maximale du coeur.

Les manchons sont réalisés en matériau métallique, par exemple en acier inox. On peut choisir les mêmes matériaux que pour l'armature, cependant comme cela est mentionné ci-dessus, les conditions auxquelles les manchons sont soumis étant moindres en termes de flux neutronique, il est possible alors d'ajuster leurs propriétés à ces conditions.

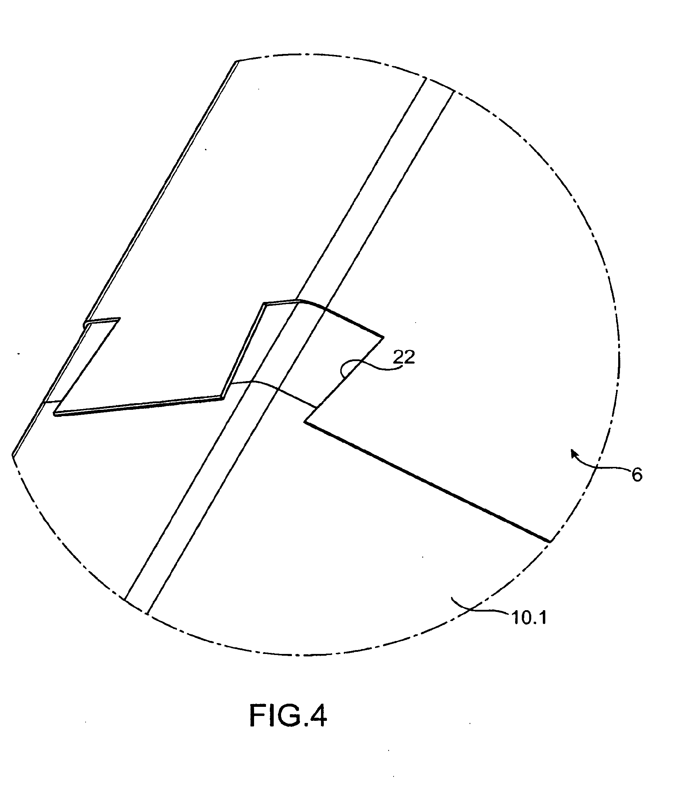

Les manchons d'extrémité 4, 6 sont fixés sur les extrémités de l'armature 8. Dans l'exemple représenté sur les figures 1 et 4, les manchons et l'armature sont assemblés par une liaison en queue d'aronde et une étape de soudage est effectuée pour rendre encore plus sûre la liaison. Pour cela, les fenêtres 13 situées au niveau des extrémités de l'armature ne sont pas fermées sur leur bord transversal, un montant transversal étant manquant, les extrémités 18 des montants axiaux sont alors libres, et comportent des formes évasées 20 coopérant avec des évidements 22 de forme correspondantes réalisés au niveau des arêtes des manchons 4, 6. Une soudure est ensuite réalisée.

Il est bien entendu que tout autre type d'assemblage est envisageable.

Les soudures entre l'armature et les manchons sont situées en dehors de la zone fissile. Elles sont donc peu soumises au flux neutronique susceptible de dégrader leur résistance mécanique.

Il est bien entendu qu'un corps d'assemblage dans lequel l'armature et les manchons ne seraient solidarisés que par soudage ou par un assemblage mécanique ne sort pas du cadre de la présente invention.

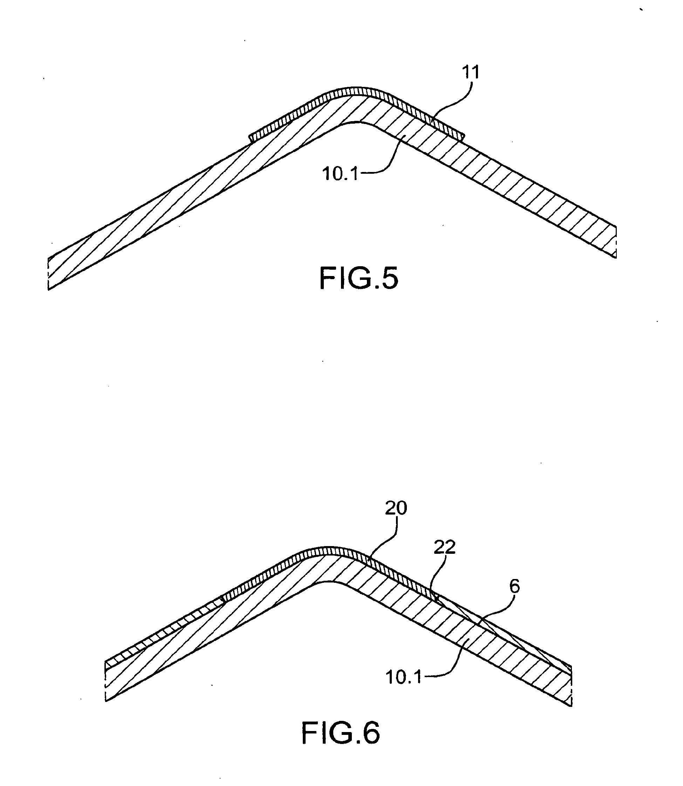

Sur la figure 6, on peut voir une vue en coupe selon le plan A-A de l'assemblage en queue d'aronde.

La structure interne du corps est réalisée en matériau céramique définissant un canal, dans lequel sont disposées les aiguilles et dans lequel s'écoule de bas en haut le fluide de refroidissement.

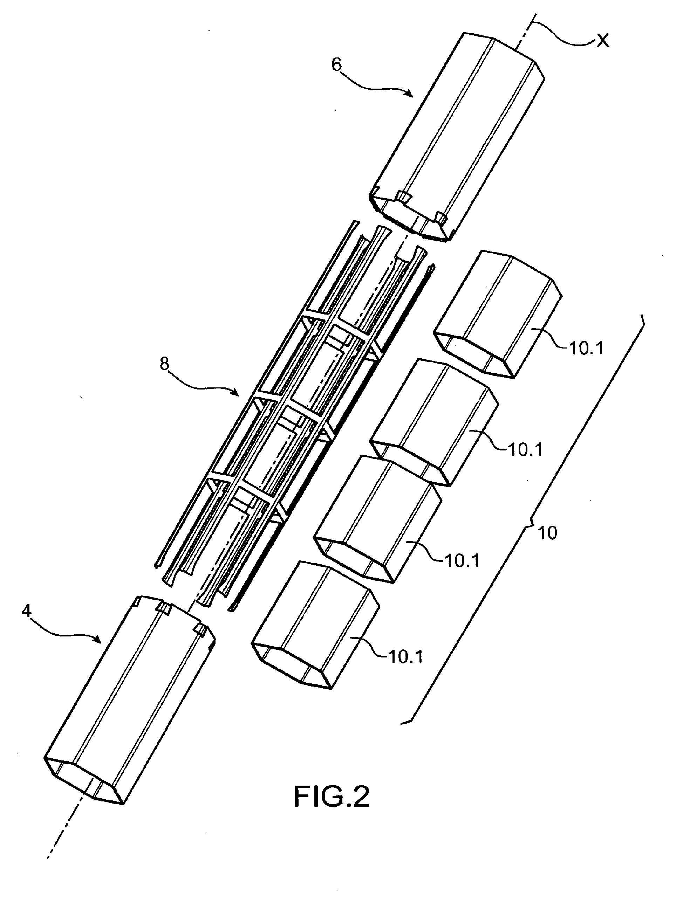

Dans l'exemple représenté sur la figure 2, la structure interne 10 est composée de tronçons tubulaires 10.1 à section hexagonale, par exemple quatre, disposés les uns sur les autres le long de l'axe X à l'intérieur de l'armature.

Cette structure en tronçons est plus particulièrement adaptée à des RNR-Na, pour lesquels la pression de sodium est relativement élevée, les tronçons étant plus aptes à tenir ces niveaux de pression.

Les tronçons 10.1 sont avantageusement emboîtés les uns dans les autres, pour cela les extrémités axiales des tronçons sont avantageusement configurées pour permettre un tel emboîtement.

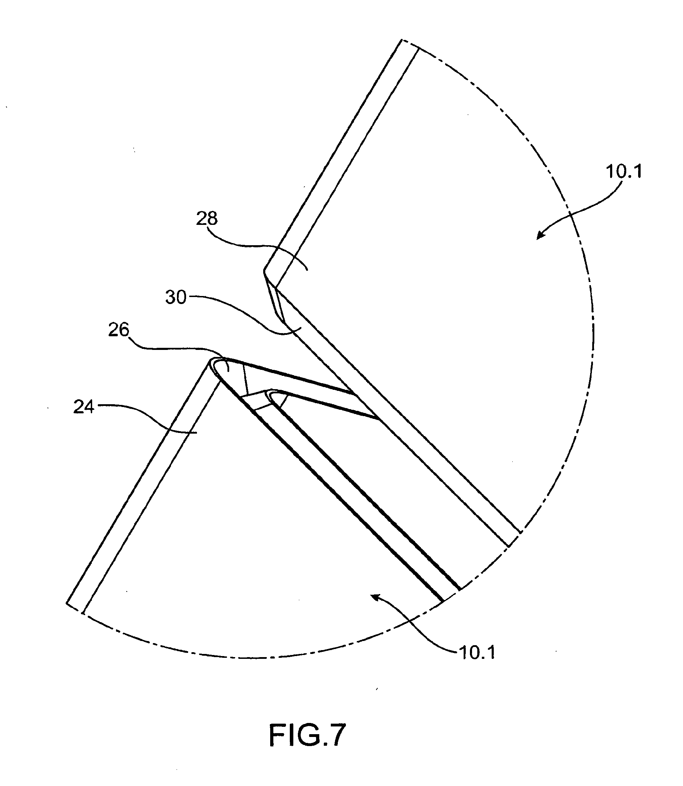

Sur la figure 7, on peut voir un exemple d'un tel emboîtement.

Par exemple, chaque tronçon 10.1 comporte une extrémité longitudinale 24 munie d'une rainure annulaire 26 de forme hexagonale et une extrémité longitudinale 28 munie d'une nervure annulaire 30 de forme correspondant à celle de la rainure 26.

Avantageusement, la nervure 30 présente une section transversale triangulaire facilitant l'emboîtement des tronçons et leur centrage. En outre, cette forme limite la fuite du fluide de refroidissement vers l'extérieur de l'assemblage en formant une chicane pour le fluide, l'écoulement du fluide entre les tronçons est donc freiné.

Il est bien entendu que des tronçons 10.1 comportant des extrémités axiales planes ou biseautées ne sortent pas du cadre de la présente invention.

En outre, les parties d'extrémité de la structure interne 10 pénètrent dans les manchons 4, 6, comme on peut le voir sur la figure 6.

On peut soit réaliser un assemblage de tronçons 10.1 formant un conduit étanche au fluide de refroidissement, soit un conduit pseudo-étanche, le fluide s'écoulant vers les zones inter-assemblages.

La présence d'un certain débit dans les espaces inter-assemblages peut être bénéfique pour la thermohydraulique globale de refroidissement du coeur, en fonctionnement normal et/ou en situations accidentelles.

Dans l'exemple représenté, les zones de raccord entre les tronçons 10.1 sont recouvertes par des montants transversaux 12 de l'armature 8, ce recouvrement a pour effet de limiter les fuites de fluide de refroidissement, comme nous le verrons par la suite. On pourrait également prévoir que les montants transversaux 12 soient décalés axialement par rapport aux zones de raccord.

De manière avantageuse, les faces intérieures des parois adjacentes des tronçons sont raccordées par un congé, dont le diamètre correspond sensiblement à celui des aiguilles du faisceau, de sorte à définir un canal hydraulique de section sensiblement constante entre la face intérieure du tronçon et les aiguilles situées sur l'extérieur des faisceaux.

Les arêtes extérieures présentent également un rayon de courbure, comme on peut le voir sur les figures 5 et 6.

Les faces extérieures des tronçons sont avantageusement en retrait de la surface extérieure du corps d'assemblage, ce qui réduit les risques de choc sur les tronçons en céramique lors de son transport et de ses manipulations.

Les tronçons 10.1 définissent un canal pour le fluide de refroidissement.

La jonction entre les tronçons 10.1 n'est pas nécessairement étanche, comme indiqué ci-dessus.

Cependant, dans le cas de fuite, on cherche à obtenir des fuites calibrées entre les tronçons, afin de maîtriser le débit de refroidissement.

Ces fuites de l'intérieur de l'assemblage vers l'extérieur assurent une circulation de fluide entre les assemblages.

Le débit de fuite est intégré au calcul du débit en entrée de l'assemblage, afin de maîtriser le débit hydraulique de refroidissement.

On évite l'apparition de fuite sous forme de jet érosif en réalisant des formes telles que décrites ci-dessus aptes à provoquer une fuite laminaire, évitant une détérioration des zones de raccord entre les tronçons.

En outre, grâce à cette possibilité d'écoulement du fluide entre les tronçons, en cas de bouchon dans la partie inférieure de l'assemblage empêchant le fluide de refroidissement de pénétrer dans l'assemblage, le fluide peut pénétrer dans l'assemblage entre deux tronçons et assurer, de manière dégradée, un refroidissement des aiguilles.

En outre, grâce à la structure une étanchéité dynamique est obtenue. En effet, lors du fonctionnement, plus particulièrement lors de la circulation du fluide de refroidissement sous pression, les tronçons ont tendance à gonfler sous l'effet de la pression du fluide de refroidissement et viennent se plaquer sur l'armature 8, l'armature étant telle que ses montants recouvrent les zones de raccord des tronçons 10.1, comme expliqué précédemment.

L'ensemble forme alors un joint autoclave.

Cette réalisation d'un corps d'assemblage en modules permet alors d'optimiser le choix des matériaux de chaque module.

Les tronçons 10.1 de la structure interne sont réalisés en céramique, qui offre une température de fusion très élevée, qui se rapproche de la température de fusion du combustible. En outre, la céramique est relativement rigide, son gonflement sous l'effet de la pression du fluide de refroidissement est alors limitée, ce qui permet de mieux maîtriser le débit au sein de l'assemblage.

Les tronçons 10.1 peuvent être réalisés en SiC-SiCf en en MAX-phases type Ti₃SiC₂.

Les matériaux MAX-phases sont des céramiques nano lamellaires alliant certaines propriétés des céramiques et certaines propriétés des métaux.

Le SiC a une température de fusion de l'ordre de 2000°C, qui est supérieure à celle de l'acier. En outre, il a un effet de modération au sein du coeur, permettant de limiter l'emballement du coeur.

De manière avantageuse, les tronçons sont réalisés en SiC fibrés (SiCf) encore plus résistant à la pression interne appliquée par le fluide de refroidissement.

La structure interne en tronçons est apte à résister à la surpression interne nécessaire à l'établissement du débit de refroidissement du faisceau, qui est de l'ordre de 3 à 5 bars pour un RNR-Na, et de l'ordre de 1 à 1,5 bars pour un RNR gaz.

En outre, les matériaux céramiques de la structure interne conservent une résistance mécanique suffisante à hautes températures pour résister à la surpression interne du fluide de refroidissement.

La structure interne selon la présente invention maintient le confinement du débit de refroidissement du faisceau fissile dans le domaine des hautes températures pouvant être atteintes lors de situations accidentelles, qui s'étendent de la température de fonctionnement à la température de fusion du combustible.

En outre, la structure interne constitue, en situation accidentelle, la première structure au contact des éléments combustibles.

Grâce à la température de fusion élevée des céramiques, elle garantit par le maintien de son intégrité une certaine mitigation de l'accident en limitant les possibilités de délocalisation du combustible, notamment radialement en cas de fusion locale d'un faisceau.

Les composites SiC/SiCf et les MAX-phases type Ti₃SiC₂ présentent des propriétés mécaniques adaptées en termes de résistance et de ténacité, et assurent une tenue mécanique du confinement du faisceau combustible jusqu'à de l'ordre de 2000°C.

En outre, du point de vue neutronique, ces matériaux conduisent à un bilan neutronique plus favorable qu'un métal en fonctionnement normal.

Par ailleurs, le SiC/SiCf apporte, en plus de sa «transparence» neutronique, un effet de modération du flux qui améliore le coefficient Doppler qui intervient dans les transitoires accidentels.

En termes de variation de réactivité potentielle du coeur en situation accidentelle de fusion, le remplacement d'une partie du corps d'assemblage en acier par du SiC/SiCf diminue significativement la variation de réactivité induite par la vidange de l'acier fondu. Dans les assemblages de l'état de la technique, la fraction volumique de l'acier dans la zone fissile est composée des gaines des éléments combustibles et du corps d'assemblage. Grâce à l'invention, la réalisation d'une partie du corps d'assemblage en SiC/SiCf réduit la fraction volumique de l'acier et donc l'effet de vidange associé.

L'assemblage du corps d'assemblage selon la présente invention s'effectue de la manière suivante :
- mise en place des tronçons 10.1 dans l'armature 8,
- emboîtement des manchons d'extrémités 4 et 6 dans les extrémités longitudinales de l'armature 8, par clipsage, et
- réalisation de soudure au niveau des emboîtements.

On peut également envisager de réaliser la structure interne sous forme de plaques obturant les fenêtres de l'armature 8, cette réalisation étant plus particulièrement adaptée à un RNR gaz, puisque, la pression du gaz étant plus faible, l'épaisseur des plaques peut être réduite.

Par exemple, ces plaques sont montées dans des glissières de l'armature.

Par exemple, les plaques sont en SiC, l'armature et les manchons en vanadium.

Nous allons maintenant décrire un exemple de réalisation plus particulièrement adapté à un réacteur à neutrons rapides à refroidissement sodium de la génération IV.

Le dimensionnement a été fait sur la base des conditions suivantes :
- un pas du réseau d'assemblages combustibles ou jeu interassemblage de 210,8 mm,
- une cote d'entre-plats interne au corps d'assemblage, dans le cas d'un tube à section hexagonale, qui est définie par la taille des faisceaux combustibles de 197, 3 mm,
- une hauteur fissile du coeur de 1000 mm,
- une surpression interne de sodium dans le corps d'assemblage de 0,34 MPa,
- une température du sodium à l'entrée coeur de 395°C, et en sortie du coeur de 550°C,
- une fluence maximale (E > 111 keV) de 3,3.10²⁷ n.m⁻².

La cote d'entre-plats interne correspond à la distance séparant deux faces parallèles de la surface interne d'un hexagone et la cote d'entre-plats externe correspond à la distance séparant deux faces parallèles de la surface externe d'un hexagone.

A partir de ces conditions dimensionnelles et de fonctionnement, les caractéristiques des différents éléments du corps d'assemblage selon la présente invention peuvent être les suivantes :
- le premier manchon 4 et le deuxième manchon 6 sont réalisés en acier austénitique standard 316 Ti ayant une cote d'entre-plats externe de 207,8 mm et une cote d'entre-plats interne de 197,3 mm, soit une épaisseur de 5,25 mm,
- l'armature 8 est réalisée en acier EM10, avec une cote d'entre-plats externe de 207,8 mm et une cote d'entre-plats interne de 205,8 mm, soit une épaisseur de 1 mm. L'armature est ajourée. Les dimensions des fenêtres sont 230 mm x 99 mm.
- la structure interne est en matériau céramique composite SiC-SiC fibré, formée de quatre tronçons s'étendant su la hauteur fissile, ayant une cote d'entre-plats externe de 204,8 mm, une cote d'entre-plats interne de 198,3 mm, soit une épaisseur de 3,25 mm.

Avantageusement, pour maîtriser la géométrie du corps d'assemblage en fabrication en respectant des intervalles de tolérances fonctionnelles, celui-ci peut être réalisé sous la forme de tronçons de hauteur de 250 mm.

Les dimensions ci-dessus ont été déterminées en tenant compte des comportements différents des matériaux dans les conditions de fonctionnement en coeur. En effet, les métaux utilisés pour l'armature 8 et les premier et deuxième manchons 4 6 se dilatent plus que le SiC-SiCf.

Le coefficient de dilatation du SiC-SiCf est de 4.10⁻⁶ et celui des aciers EM10 et du gainage des aiguilles combustibles est compris entre 12.10⁻⁶ et 14.10⁻⁶.

Pour accommoder ces dilatations différentielles entre le faisceau combustible et le structure interne en SiC, la cote d'entre-plat des tronçons 10.1 est de 198,3 mm, soit 1 mm de plus que celle de l'entre-plat des premiers et deuxième manchons 4, 6. Les tronçons sont emmanchés dans les manchons qui ont un alésage d'emboîtement usiné adapté à la cote externe des tronçons, un jeu de montage étant prévu. Par exemple, la cote interne de l'alésage est 205,8 mm et la cote externe des tronçons est 204,8 mm.

Le jeu entre le faisceau d'aiguille et le corps d'assemblage est donc accru de 1 mm en vis-à-vis de la paroi interne des tronçons pour éviter l'interaction à la température de fonctionnement.

En outre, le matériau de l'armature et celui des tronçons ont des gonflements sous flux différents : à la fluence visée, le gonflement de l'EM10 n'interviendra qu'en fin de vie. Par contre, le SiC-SiCf gonfle dès le début de son irradiation, par exemple dès qu'une fluence rapide de l'ordre de 0,34.10²⁵ n/m2 est atteinte.

Le SiC-SiCf atteint très vite sa valeur de gonflement volumique à saturation qui est de l'ordre de 1 % à 1,5 % à la température de fonctionnement entre 400°C et 550°C.

Pour accommoder ce gonflement du SiC en début de vie sans interaction forte avec l'armature 8 en EM10, on prévoit un jeu entre la surface extérieure des tronçons et la surface intérieure de l'armature 8.

Par exemple, on prévoit un jeu initial de 1 mm avec une cote d'entre-plats interne de l'armature en EM10 de 205,8 mm et une cote d'entre-plats externe des tronçons en SiC de 204,8 mm.

En outre, on prévoit avantageusement un jeu axial au niveau de l'alésage d'emboîtement de l'extrémité du tronçon dans le deuxième manchon.

Celui-ci a par exemple une profondeur telle qu'elle ménage un jeu axial de 5 mm une fois l'ensemble monté.

Avantageusement, un dispositif de compensation du jeu axial est prévu entre l'extrémité du tronçon et le deuxième manchon, pour assurer le maintien en place jointif des tronçons avant la mise en place des assemblages en réacteur, notamment pendant les opérations de transport et de manutention.

Par exemple, le dispositif de compensation peut prendre la forme d'une rondelle mince munie d'ondulations d'amplitude 5 mm s'intercalant entre l'empilement axial des tronçons et le deuxième manchon supérieur.

En début de fonctionnement, la rondelle est écrasée lors du gonflement axial des tronçons.

Par exemple l'épaisseur des tronçons est de l'ordre de 3,5, ce qui permet de minimiser le niveau de contrainte dans les tronçons sous l'action de la pression interne. De plus, les congés de raccordement au niveau des arêtes internes des tronçons peuvent être de 5 mm pour éviter une concentration de contrainte et pour réguler le diamètre hydraulique du canal de refroidissement de l'aiguille de coin du faisceau.

Le corps d'assemblage, selon la présente invention avec les éléments dont les dimensions ont été données ci-dessus, présente donc les dimensions suivantes :
- une cote d'entre-plats externe de 207,8 mm,
- une cote d'entre-plats interne de 197,3 mm avec 198,3 mm localement sur la hauteur du TH SiC,
- un jeu dans le pas du réseau de 3 mm.

On rappelle ci-après les dimensions d'un corps d'assemblage monolithique métallique en EM10 de l'état de la technique adapté à ce même coeur :
- une cote d'entre-plats externe de 206,3 mm,
- une cote d'entre-plats interne de 197,3 mm,
- un jeu dans le pas du réseau (jeu inter-assemblages) : 4,5 mm.

Sur la base de ces dimensions, les fractions volumiques de matériaux dans le volume fissile du coeur d'un corps d'assemblage monolithique en acier de l'état de la technique et un corps d'assemblage selon la présente invention, ont été calculées et sont rassemblées dans le tableau ci-dessous :

| FRACTION VOLUMIQUE DANS LA ZONE FISSILE | Métal | Sodium | SiC-SiCf |
|---|---|---|---|
| Corps d'assemblage monolithique | 8,17 % | 4,22 % | 0 % |
| Corps d'assemblage métal/SiC-SiCf | 0,44 % | 6,05 % | 5,9 % |

On constate donc que, grâce à la présente invention, la fraction volumique de métal est fortement réduite, puisqu'elle est de 0,44 % au lieu de 8,17 % pour le corps d'assemblage de l'état de la technique, au bénéfice principal de l'apport d'une fraction volumique significative du matériau SiC-SiCf présentant de meilleures propriétés neutroniques, i.e. une meilleure «transparence» neutronique et un effet de modération.

La présence de sodium dans les évidements de l'armature 8 accroît légèrement de 1,8 % la fraction volumique du sodium de l'espace inter-assemblages.

Une évaluation neutronique des effets de cette modification des fractions volumiques des matériaux constitutifs du corps d'assemblage en comparaison d'un corps d'assemblage monolithique métallique montre pour le coeur pour un même temps de séjour :
- un gain sur le coefficient de vidange de sodium de 0,3 $,
- un gain sur le coefficient Doppler de 10 %,
- un léger gain sur le gain de régénération et sur l'investissement en Pu,
- un taux de dommage sur les gaines des éléments combustibles analogue,
- un taux de dommage sur le SiC de 186 dpa-SiC pour 145 dpa sur le TH métallique de référence.

Le Gain de Régénération GR est le rapport entre le nombre d'atomes fissiles final et le nombre d'atomes fissiles initial, quand le GR est > 1, on dit qu'il y a surgénération, on produit plus de fissile que l'on en consomme. C'est par exemple le cas d'un RNR avec production de Pu239 à partir du fertile U238 avec à l'arrivée plus de Pu239 qu'au départ.

Le dpa ou déplacement par atome exprime le dommage d'irradiation subit par un matériau soumis à un flux de neutrons rapides, il quantifie statistiquement le nombre de fois où un atome du matériau subit un déplacement sous l'impact d'un neutron rapide (d'énergie supérieure à 0,1 MeV).

En outre, la forte baisse de la fraction volumique de métal a également des effets en situation accidentelle de fusion, puisque, lors de la vidange de l'acier fondu en cas de fusion, la variation de réactivité induite par cette vidange diminue significativement.

Le corps d'assemblage selon la présente invention permet donc, tout en remplissant le cahier des charges des corps d'assemblage existant, d'améliorer significativement les paramètres de fonctionnement neutroniques du coeur en fonctionnement normal, incidentel, qui qualifie des incidents de fonctionnement d'occurrence supérieur à 10⁻² /an et accidentel.

Il apporte également des éléments de mitigation des accidents pouvant conduire à la fusion du combustible en renforçant le niveau d'ensemble de réfractarité des matériaux de structure du coeur et en diminuant leur poids en réactivité au cours du déroulement de l'accident.

Le corps d'assemblage selon la présente invention peut être facilement adapté au réacteur à neutrons rapides à refroidissement gaz, par exemple en réalisant les manchons et l'armature dans des métaux réfractaires comme le NbZrC ou semi-réfractaires comme le vanadium par exemple.

On peut prévoir de réaliser l'armature et les manchons dans le même métal, remplissant les conditions plus sévères appliquées à l'armature, cependant pour des raisons de coût, de préférence on choisit des matériaux différents, dont les propriétés sont ajustées aux conditions d'utilisation, le matériau des manchons ayant des propriétés moindre en termes de tenue au flux neutronique.

Dans le cas d'un corps d'assemblage destiné à être utilisé dans un RNR-Na pour lequel les températures de fonctionnement sont comprises dans la gamme 350°C-700°C, les parties métalliques comme l'armature et les manchons sont en aciers inox austénitiques, ferritiques et ferrito-martensitiques, la structure interne en céramique peut être réalisée en SiC-SiCf ou en MAX-phases type Ti₃SiC₂.

Dans le cas d'un corps d'assemblage destiné à être utilisé dans un RNR-gaz dont les températures de fonctionnement sont comprises dans la gamme 300°C-900°C, l'armature et les manchons peuvent être réalisés dans des métaux réfractaires, la structure interne en céramique peut être réalisée en SiC-SiCf ou en MAX-phases type Ti₃SiC₂.

Hormis la structure interne en céramique, la présente invention présente l'avantage de ne pas nécessiter de développer de nouveaux matériaux, mais de pouvoir utiliser ceux déjà existants, dont les propriétés ont déjà été éprouvées dans les assemblages de réacteur.

## Revendications

1. Corps d'assemblage de combustible nucléaire destiné à recevoir des aiguilles de combustibles nucléaires pour former un assemblage de combustible nucléaire, ledit corps d'axe longitudinal (X) comportant un premier manchon tubulaire (4) et un deuxième manchon tubulaire (6) en matériau métallique formant les extrémités longitudinales du corps d'assemblage, une armature (8) en matériau métallique raccordant le premier (4) et le deuxième (6) manchon, l'armature (8) étant ajourée, et une structure interne tubulaire (10) disposée entre le premier (4) et le deuxième (6) manchon à l'intérieur de l'armature (6), **caractérisé en ce que** ladite structure interne tubulaire est en céramique.

2. Corps d'assemblage selon la revendication 1, dans lequel la structure interne (10) est étanche au fluide de refroidissement destiné à la traverser.

3. Corps d'assemblage selon la revendication 1, dans lequel la structure interne (10) comporte des zones de fuites calibrées.

4. Corps d'assemblage selon l'une des revendications 1 à 3, dans lequel la structure interne (10) comporte des tronçons (10.1) superposés longitudinalement, les deux tronçons (10.1) situées au deux extrémités de la structure interne (10) pénétrant partiellement dans les premier et deuxième manchons (4, 6).

5. Corps d'assemblage selon la revendication 4, dans lequel les tronçons (10.1) s'emboîtent les uns dans les autres, les extrémités longitudinales des tronçons (10.1) s'emboîtant comportant pour l'une une rainure (26) et pour l'autre une nervure (30) de forme correspondante.

6. Corps d'assemblage selon l'une des revendications 1 à 5, dans lequel l'armature (8) est formée par l'assemblage de montant définissant des fenêtres.

7. Corps d'assemblage selon la revendication 6, dans lequel l'armature comporte des montants axiaux et transversaux.

8. Corps d'assemblage selon la revendication en combinaison avec la revendication 4 ou 5, dans lequel les montants transversaux recouvrent des zones de raccordement des manchons (4, 6).

9. Corps d'assemblage selon l'une des revendications 1 à 8, dans lequel l'armature (8) est fixée sur les manchons (4, 6) par soudage, par exemple l'armature (8) étant fixée sur les manchons (4, 6) par un assemblage mécanique du type à queue d'aronde.

10. Corps d'assemblage selon l'une des revendications 1 à 5, dans lequel l'armature (8) est formée d'un tube ajouré de perçages formant des lumières circulaires ou oblongues.

11. Corps d'assemblage selon l'une des revendications 1 à 3, dans lequel la structure interne (10) est formée de plaques fixées sur l'armature (8) de sorte à obturer les fenêtres de ladite armature (8).

12. Corps d'assemblage selon l'une des revendications 1 à 10, comportant un dispositif de compensation d'un jeu axial entre l'extrémité du tronçon d'extrémité et le deuxième manchon destiné à être situé dans la partie supérieure de l'assemblage, par exemple le dispositif de compensation est une rondelle munie d'ondulations d'amolitude 5 mm s'intercalant entre le tronçon d'extrémité et le deuxième manchon supérieur.

13. Corps d'assemblage selon l'une des revendications 1 à 12, présentant une section transversale hexagonale régulière.

14. Corps d'assemblage selon l'une des revendications 1 à 13, dans lequel la structure interne (10) est en SiC, en SiC fibré ou en matériaux MAX-phases type Ti₃SiC₂, où les matériaux MAX-phases sont des céramiques nano lamellaires.

15. Corps d'assemblage selon l'une des revendications 1 à 14, pour réacteur à neutron rapide refroidi au sodium, dans lequel les manchons (4, 6) et l'armature (8) sont aciers inox austénitiques, ferritiques ou ferrito-martensitiques.

16. Corps d'assemblage selon l'une des revendications 1 à 14 pour un réacteur à neutrons rapides refroidi au sodium, dans lequel les manchons (4, 6) sont en acier austénitique standard 316 Ti et l'armature (8) en EM10.

17. Corps d'assemblage selon l'une des revendications 1 à 14, pour un réacteur à neutrons rapides refroidi au gaz, dans lequel les manchons (4, 6) et l'armature (8) sont réalisés dans des métaux réfractaires.

18. Assemblage comportant un pied, un corps d'assemblage selon l'une des revendications 1 à 17, des aiguilles de combustible nucléaire disposées dans le corps d'assemblage et une protection neutronique supérieure, le corps étant fixé sur le pied (11) et sur la protection neutronique supérieure (13) au niveau des premier et deuxième manchons (4, 6) respectivement, par exemple par soudage.

## Patentansprüche

1. Gehäuse für ein Kernbrennstabbündel, dazu bestimmt, Kernbrennstäbe aufzunehmen, um ein Kernbrennstabbündel zu bilden, wobei das genannte Gehäuse mit der Längsachse (X) umfasst: eine erste rohrförmige Hülse (4) und eine zweite rohrförmige Hülse (6) aus metallischem Material, welche die Längsenden des Bündelgehäuses bilden; eine die erste Hülse (4) und die zweite Hülse (6) verbindende Armierung (8) aus metallischem Material, wobei die Armierung (8) durchbrochen ist; und eine röhrenförmige innere Struktur (10), angeordnet zwischen der ersten (4) und der zweiten (6) Hülse im Innern der Armierung (6),
**dadurch gekennzeichnet, dass** die genannte röhrenförmige innere Struktur aus Keramik ist.

2. Brennstabbündelgehäuse nach Anspruch 1, bei dem die innere Struktur (10) dicht ist gegenüber dem Kühlmittel, von dem es durchflossen wird.

3. Brennstabbündelgehäuse nach Anspruch 1, bei dem die innere Struktur (10) kalibrierte Undichtigkeitszonen umfasst.

4. Brennstabbündelgehäuse nach einem der Ansprüche 1 bis 3, bei dem die innere Struktur (10) longitudinal aufeinandergesetzte Teilstücke (10.1) umfasst, wobei die beiden an den beiden Enden der inneren Struktur (10) befindlichen Teilstücke (10.1) partiell in die erste (4) und die zweite (5) Hülse eindringen.

5. Brennstabbündelgehäuse nach Anspruch 4, bei dem die Längsenden der Teilstücke (10.1) ineinandergefügt sind, wobei das Eine der ineinandergefügten Enden der Teilstücke (10.1) eine Nut (26) und das Andere eine Rippe (30) von entsprechender Form umfasst.

6. Brennstabbündelgehäuse nach einem der Ansprüche 1 bis 5, bei dem die Armierung (8) durch den Zusammenbau Trägern gebildet wird, welche Fenstern abgrenzen.

7. Brennstabbündelgehäuse nach Anspruch 6, bei dem die Armierung axiale und transversale Träger umfasst.

8. Brennstabbündelgehäuse nach Anspruch 7 in Kombination mit Anspruch 4 oder 5, bei dem die transversalen Träger Verbindungszonen der Hülsen (4, 6) überdecken.

9. Brennstabbündelgehäuse nach einem der Ansprüche 1 bis 8, bei dem die Armierung an den Hülsen (4, 6) mittels Schweißung befestigt ist, zum Beispiel bzw. und/oder die Armierung (8) an den Hülsen (4, 6) durch einen mechanischen Zusammenbau des Typs Schwalbenschwanz befestigt ist.

10. Brennstabbündelgehäuse nach einem der Ansprüche 1 bis 5, bei dem die Armierung (8) durch ein Rohr gebildet wird, durchbrochen von Löchern, die runde oder längliche Öffnungen bilden.

11. Brennstabbündelgehäuse nach einem der Ansprüche 1 bis 3, bei dem die innere Struktur (10) gebildet wird durch derart auf der Armierung (8) befestigte Platten, dass sie die Fenster der genannten Armierung (8) verschließen.

12. Brennstabbündelgehäuse nach einem der Ansprüche 1 bis 10 mit einer Einrichtung zur Kompensation eines Axialspiels zwischen dem Ende des End-Teilstücks und der im Oberteil des Brennstabbündels befindlichen zweiten Hülse, wobei die Kompensationseinrichtung eine mit Wellungen mit einer Amplitude von 5 mm versehene Scheibe ist, eingebaut zwischen dem End-Teilstück und der zweiten, oberen Hülse.

13. Brennstabbündelgehäuse nach einem der Ansprüche 1 bis 12, das einen gleichmäßigen hexagonalen Querschnitt aufweist.

14. Brennstabbündelgehäuse nach einem der Ansprüche 1 bis 13, bei dem die innere Struktur (10) aus SiC, aus faserverstärktem SiC oder aus Mₙ₊₁AXₙ-Phasen- oder MAX-Pasen-Material des Typs Ti₃SiC₂ ist, wo die MAX-Phasen-Materialen nano-lamellare Keramiken sind.

15. Brennstabbündelgehäuse nach einem der Ansprüche 1 bis 14 für einen natriumgekühlten schnellen Brutreaktor, bei dem die Hülsen (4, 6) und die Armierung (8) aus austenitischen, ferritischen oder ferritisch-martensitischen nicht rostenden Stählen sind.

16. Brennstabbündelgehäuse nach einem der Ansprüche 1 bis 14 für einen natriumgekühlten schnellen Brutreaktor, bei dem die Hülsen (4, 6) aus austenitischem Stahl, Standard 316 Ti sind und die Amierung (8) aus EM10 ist.

17. Brennstabbündelgehäuse nach einem der Ansprüche 1 bis 14 für eine gasgekühlten schnellen Brutreaktor, bei dem die Hülsen (4, 6) aus refraktären Metallen sind.

18. Brennstabbündel mit einem Fuß, einem Brennstabbündelgehäuse nach einem der Ansprüche 1 bis 17, Kernbrennstoffnadeln, angeordnet in dem Gehäuse und einem oberen Neutronschutz, wobei das Gehäuse zum Beispiel durch Schweißung an dem Fuß (11) und an dem oberen Neutronenschutz (13) befestigt ist, in Höhe der ersten beziehungsweise der zweiten Hülse (4, 6).

## Claims

1. A nuclear fuel assembly body intended to receive nuclear fuel pins to form a nuclear fuel assembly, said body of lengthways axis (X) comprising a first tubular segment (4) and a second tubular segment (6) made from a metal material forming the lengthways ends of the assembly body, a frame (8) made from a metal material connecting the first (4) and second (6) sleeves, the frame (8) being openworked, and a ceramic tubular internal structure (10) being positioned between the first (4) and second (6) sleeve inside the frame (6).

2. An assembly body according to claim 1, in which the internal structure (10) prevents leakage of the cooling fluid intended to traverse it.

3. An assembly body according to claim 1, in which the internal structure (10) comprises calibrated leakage zones.

4. An assembly body according to one of the claims 1 to 3, in which the internal structure (10) comprises lengthways superimposed segments (10.1), where the two segments (10.1) positioned at both ends of the internal structure (10) partially penetrate into the first and second sleeves (4, 6).

5. An assembly body according to claim 4, in which the segments (10.1) are socketed into one another, the lengthways ends of the socketed segments (10.1) comprising, in the case of one, a groove (26) and, in the case of the other, a rib (30) of matching shape.

6. An assembly body according to one of the claims 1 to 5, in which the frame (8) is formed by the assembly of struts defining windows.

7. An assembly body according to claim 6, in which the frame comprises axial and transverse struts.

8. An assembly body according to claim 7, in combination with claim 4 or 5, in which the transverse struts cover zones where the segments (4, 6) are connected.

9. An assembly body according to one of the claims 1 to 8, in which the frame (8) is attached to the sleeves (4, 6) by welding, for example the frame (8) being attached to the sleeves (4, 6) a mechanical assembly method of the dovetail joint type.

10. An assembly body according to one of the claims 1 to 5, in which the frame (8) is formed from a tube perforated with drill holes forming circular or oblong slots.

11. An assembly body according to one of the claims 1 to 3, in which the internal structure (10) is formed from plates attached to the frame (8) so as to block the windows of said frame (8).

12. An assembly body according to one of the claims 1 to 10, comprising a device for compensating for an axial play between the end of the end section and the second sleeve intended to be located in the upper part of the assembly, for example the compensation device is a washer with undulations of amplitude 5 mm inserted between the end segment and the second upper sleeve.

13. An assembly body according to one of the claims 1 to 12, having a regular hexagonal transverse section.

14. An assembly body according to one of the claims 1 to 13, in which the internal structure (10) is made of SiC, fibre-reinforced SiC or MAX-phases materials of the Ti₃SiC₂ type, MAX-phases materials being nano-lamellar ceramics

15. An assembly body according to one of the claims 1 to 14, for a sodium-cooled fast neutron reactor in which the sleeves (4, 6) and the frame (8) are made from austenitic, ferritic or ferritic/martensitic steels.

16. An assembly body according to one of the claims 1 to 14 for a sodium-cooled fast neutron reactor, in which the sleeves (4, 6) are made from 316 Ti standard austenitic steel and the frame (8) from EM10.

17. An assembly body according to one of the claims 1 to 14, for a gas-cooled fast neutron reactor in which the sleeves (4, 6) and the frame (8) are made from refractory metals.

18. An assembly comprising a foot, an assembly body according to one of the claims 1 to 17, nuclear fuel pins positioned in the assembly body and an upper neutron protection, where the body is attached to the foot (11) and to the upper neutron protection (13) in the area of the first and second sleeves (4, 6) respectively, for example by welding.
